# EUROPÄISCHE PATENTSCHRIFT

(11) **EP 0 808 771 B1**
(45) Veröffentlichungstag und Bekanntmachung des Hinweises auf die Patenterteilung: **27.11.2002**
(21) Anmeldenummer: 97107163.4
(22) Anmeldetag: 30.04.1997
(51) Int. Cl.: B65B 27/12, A01F 15/14

(54) **Maschine zum Pressen und Umschnüren von Ballen**
Machine for pressing and tying bales
Machine pour presser et lier des balles

(30) Priorität: 22.05.1996 DE 19620535
(43) Veröffentlichungstag der Anmeldung: 26.11.1997
(73) Patentinhaber: Paal's Packpressen-Fabrik GmbH & Co. KG, 49124 Georgsmarienhütte (DE)
(72) Erfinder: Telscher, Thomas, 49078 Osnabrück (DE)
(74) Vertreter: Busse & Busse Patentanwälte

(56) Entgegenhaltungen:
- EP-A- 0 235 378

## Beschreibung

Maschinen zum Pressen und Umschnüren von Ballen, wie sie beispielsweise aus der EP-Patentschrift 0 235 378 bekannt sind, unterliegen in erster Linie den stringenten Anforderungen an Robustheit, Betriebssicherheit und Haltbarkeit, wie sie im allgemeinen großen und teueren Einrichtungen dieser Art abverlangt werden, insbesondere wenn sie in einem kontinuierlichen Betrieb arbeiten sollen. Besondere Anforderungen an derartige Maschinen ergeben sich mit Änderung der zu verpressenden Materialien, etwa infolge einer Abfall-Aufbereitung massiert anfallender stark expansiver bzw. stark elastischer Materialien wie Kunststoffbehälter und -folien, die eine einerseits engliegende und andererseits hoch belastbare Umschnürung erfordern. Dies soll aber normalerweise nicht zu sperrigen Umschnürungseinrichtungen und lang aus den Ballen herausragenden Verdrillungen führen, vielmehr besteht eine grundsätzliche Zielrichtung zu kompakten Bauformen der Maschine und zu kurzen, wenig störenden und unauffälligen Drillenden an den Umschnürungen der Ballen.

Im Sinne der vorgenannten Zielsetzungen wird eine Maschine nach dem Oberbegriff des Anspruchs 1 erfindungsgemäß mit den kennzeichnenden Merkmalen des Anspruchs 1 ausgestaltet.

Die erfindungsgemäße Lösung greift zunächst einmal in das Erfassen und Vorverformen der Umschnürungs-Drähte ein, die hauptsächlich nach dem Abtrennen durch die Schneidbacken mit Hilfe der Drillhaken zu verdrillen sind und keineswegs nach dem Schneiden aus dem Drillhaken herausrutschen dürfen. Kritisch in dieser Hinsicht ist insbesondere jener der beiden Drillhaken, der mit dem Schneidbacken verbunden ist und naturgemäß eine relativ kurze überstehende Drahtlänge bietet. Gegen ein Herausrutschen ist eine Führung mit Hilfe einer als Wendel geformten Leitkante zu einer exzentrischen Knickkante hin vorteilhaft, da somit die Drähte im Bereich zwischen Drillschlitz und Schneidbacken relativ scharf abgewinkelt werden können. Damit läßt sich ein Hinausrutschen der Drähte aus dem Drillschlitz wirksam verhindern.

Gleichzeitig ergibt sich aus der einer Grundgestaltung mit einer exzentrischen Knickkante eine Drahtführung, die durch den Drillschlitz im wesentlichen axial und zur Zuführeinrichtung hin stark radial bzw. tangential gerichtet ist, so daß die axiale Baulänge der Drilleinrichtung von den Drillhaken her kompakt und kurz ausgebildet sein kann. Damit läßt sich die gesamte Bauform der Umschnürungseinrichtung auch dann kurz halten, wenn etwa relativ viele Verdrillungen der Drähte im Sinne einer hohen Belastbarkeit der Umschnürung benötigt werden. Insbesondere aber ergibt sich mit der kompakten Bauform auch eine relativ kurze und insbesondere ohne lange, frei überstehende Enden auskommende Verdrillung mit Vorteil für eine gute Handhabbarkeit und eine geringe Verletzungsgefahr.

Gleichzeitig eröffnet die erfindungsgemäße Gestaltung der Drillhaken eine gedrungene Bauform, die es erleichtert, bei schwierigen, insbesondere elastisch-expansiven Materialien dickere Drähte mit höherer Belastbarkeit und besserem Rückhaltevermögen zu verwenden, ohne zu voluminösen Bauformen überzugehen. Desgleichen ist es bei solchen schwierigen Materialien möglich, eine allseitige - horizontale und vertikale - Umschnürung vorzusehen, was leicht zu Schwierigkeiten mit baulichem Gedränge, zumindest aber sonst zu voluminösen Anbauten führen würde.

Vorteilhaft wird vorgesehen, daß die exzentrische Knickkante einen größeren radialen Abstand von der Achse des Drillhakens als der Drillschlitz aufweist, um einerseits eine markante Verformung der Drähte an der Knickkante sicherzustellen, andererseits aber eine möglichst eng umlaufende und damit aber störenden Bewegungen erfolgende Verdrillung zu erzielen.

Vorteilhafterweise können die Knickkante und die umlaufende Schneidbacken in einem gemeinsamen axialen Bereich liegen, wozu dann die Drähte vorwiegend senkrecht zur Axialrichtung verlaufen. Typischerweise können die Schneidbacken axial ausgerichtet sein, wobei diese sich über einen axialen Bereich erstrecken, in den auch die exzentrische Knickkante hineinfällt.

Ein Ausführungsbeispiel der Erfindung ist in der Zeichnung dargestellt und wird nachfolgend näher beschrieben. In der Zeichnung zeigen:
- Fig. 1: Längsschnitt durch eine Kanalballenpresse,
- Fig. 2: vergrößerte Detailansicht des Bereichs II in Fig. 1, und
- Fig. 3: Schnitt nach Linie III-III in Fig. 2.

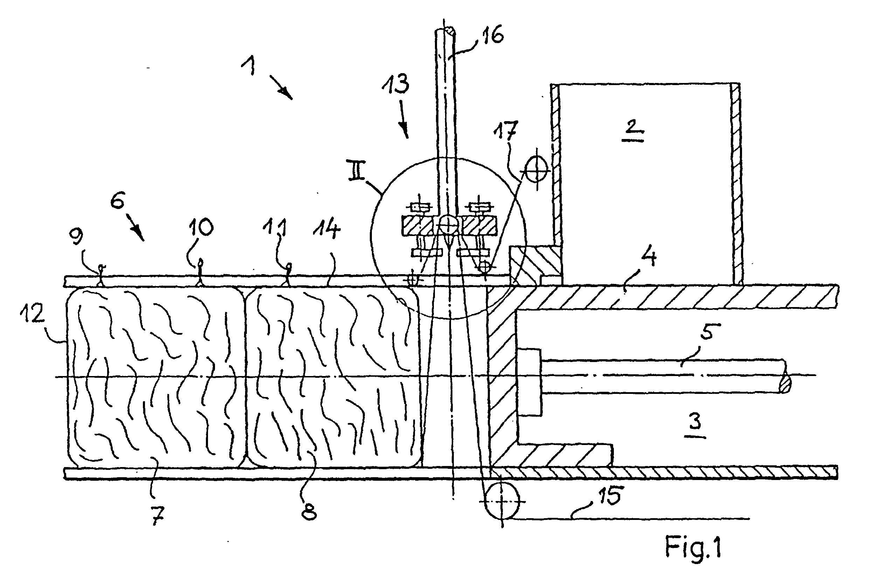

Eine in Fig. 1 insgesamt mit 1 bezeichnete Kanalballenpresse umfaßt typischerweise einen Einfüllschacht 2, durch den zu verpressendes Material von oben in einen darunterliegenden Pressenraum 3 eingegeben wird, den ein Preßstempel 4 mit Hilfe eines Preßkolbens 5 (hier nur durch eine Kolbenstange angedeutet) horizontal von einer rückwärtigen Ausgangsstellung in einen Preßkanal 6 hinein durchläuft, um von dort wieder in die Ausgangsstellung zurückzukehren. In dem Preßkanal 6 befinden sich gepreßte Ballen 7,8, von denen ersterer bereits abgebunden ist und letzterer fertiggepreßt vor dem Abbinden steht.

Dieses Abbinden erfolgt mit Hilfe mehrerer nebeneinanderliegender Draht-Umschnürungen, die im vorliegenden Fall in vertikalen Ebenen liegen sollen. Es versteht sich, daß alternativ oder auch zusätzlich horizontalliegende Umschnürungen vorgesehen werden können, wobei Umschnürungen sowohl in vertikaler wie auch in horizontaler Richtung zunehmend bei expansiven und stückigen Materialien von Interesse sind, um die Ballen allseitig zusammenzuhalten. Für den Gegenstand der vorliegenden Erfindung reicht es allerdings aus, die dargestellte vertikale Umschnürung zu betrachten.

Dabei wird aus jeweils zwei Verdrillungen 9,10,oder 11 eine ringförmige Umschnürung 12 gebildet, wobei eine insgesamt mit 13 bezeichnete Umschnürungseinrichtung gleichzeitig eine (End-)Verdrillung 10 für einen fertigen Ballen (hier 7) und eine Anfangs-Verdrillung 11 für den nächsten Ballen, zunächst zur Bildung einer offenen Drahtschleife 14, erstellt. Hierzu wird ein in Preßrichtung mitlaufender unterer Draht 15 mit Hilfe einer Drahtzugnadel 16 hochgeholt und mit einem oberseitig in Preßrichtung von einer Vorratsrolle oder dgl. (nicht dargestellt) ablaufenden Draht 17 zusammengeführt und in der Verdrilleinrichtung 13 verdrillt.

Es versteht sich, daß zur Herstellung paralleler Umschnürungen, z.B. von vier Umschnürungen je Ballen, mehrere untereinander gleiche Umschnürungseinrichtungen 13, in der Ansicht gemäß Fig. 1 hintereinanderliegend, vorzusehen sind. In der Darstellung gemäß Fig. 1 ist der Preßstempel 4 gegenüber dem fertiggestellten Ballen der einfachen Darstellung halber von seiner vorderen Endstellung zurückgefahren dargestellt. Typischerweise enthält der Preßstempel 4 im Bereich seiner Vorderseite vertikale, nach vorne spaltartig offene Schlitze, durch die die Drahtholnadel 16 nach unten bewegbar ist und die Drähte nach oben ziehbar sind, während der Preßstempel in seiner vorderen Endstellung den noch nicht abgebundenen Ballen unter Preßdruck hält.

In Fig. 1 ist die Umschnürungseinrichtung 13 vergrößert dargestellt. Diese weist einen Träger 18 auf, der durchgängig auch für parallel arbeitende Umschnürungseinrichtungen der gleichen Presse dient und in dem mit zueinander parallelen Achsen zwei Drillhaken 19,20 über Wellen 21,22 gelagert sind, welche an der Oberseite des Trägers mit Kettenrädern 23,24 verbunden sind. Die Kettenräder 23,24 und auch die Kettenräder der auf dem gleichen Träger 18 angeordneten weiteren Umschnürungseinrichtungen werden von einer gemeinsamen Kette (nicht dargestellt) zu einem synchronisierten Lauf umschlungen.

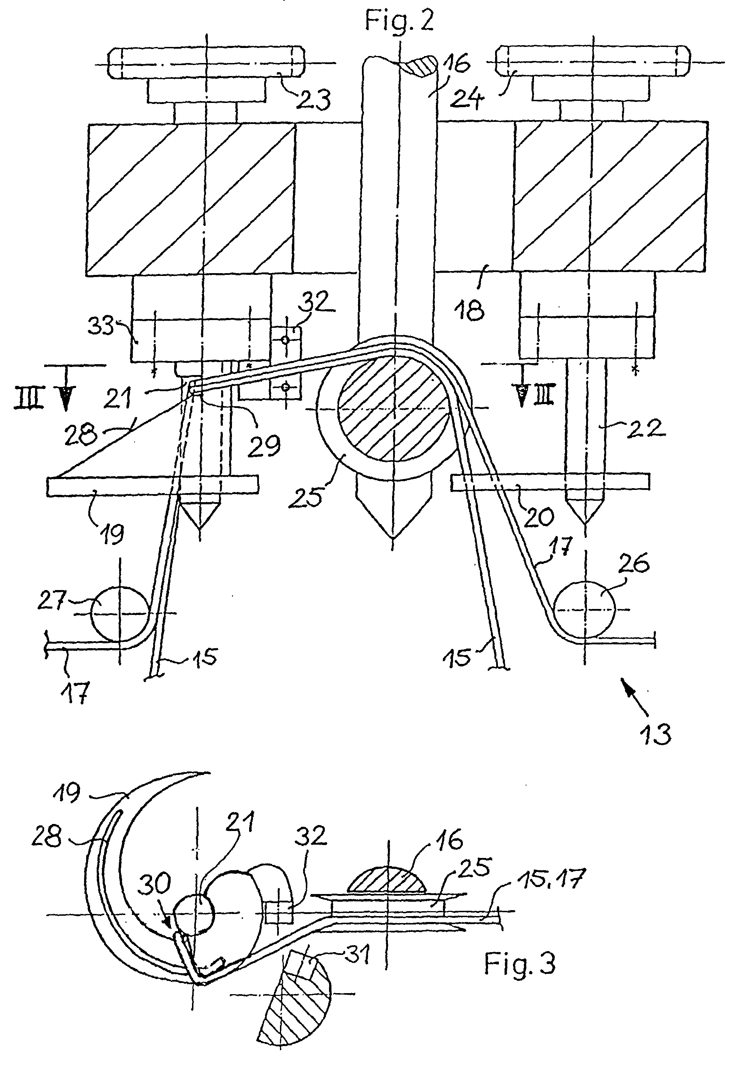

Die Drahtholnadel 16 hat in der in Fig. 2 gezeigten Stellung mit Hilfe einer Rolle 25 den Draht 15 von unten hochgeholt und mit dem Draht 17 zusammengeführt, so daß beide nach oben gezogen sind. Der Draht 17 wird dabei über Umlenkrollen 26,27 niedergehalten, so daß die beiden Drähte beiderseits der Rolle 25 nahe zusammenliegen. Dabei werden sie so durch den Schwenkbereich der Drillhaken 19,20 geführt, daß sie von den Drillhaken erfaßt werden können. Wie aus Fig. 3 ersichtlich ist, hat der im Uhrzeigersinn umlaufende Drillhaken 9' die beiden Drähte 15 und 17 erfaßt und achsnah an die Drillhakenwelle 21 bis zu einem Drillschlitz 30 herangezogen.

Bei diesem Erfassen der Drähte 15,17 werden diese von einer als Wendel geformten Gleitkante 28 erfaßt und axial von Drillhaken 19 in Richtung auf den Träger 18 hin ausgelenkt. Die Gleitkante 28 endet in einer Knickkante 29 mit einem Abstand von der Welle 21, die für eine Knickverformung der Drähte 15,17 sorgt. Dies ist bedeutsam für den nachfolgenden Wickelvorgang, bei dem die zuvor abgeschnittenen Drähte auf keinen Fall durch einen zwischen Drillhaken 19 und Welle 21 gebildeten Drillschlitz 30 hindurchrutschen dürfen. Dies ist mit einer plastischen Verformung der Drähte 15,17 zu einem abgeknickten Ende möglich. Die Gleitkante 28 ergibt sich konstruktiv aus der Kontur eines wendelförmigen Steges auf dem Drillhaken 19.

Aus dem Bereich der Knickkante 29 verlaufen die Drähte 15,17 über eine freie Weglänge zur Rolle 25 hin. In diesem Bereich werden sie mit Hilfe eines feststehenden Schneidbackens 31 und eines mit dem Drillhaken auf gleicher Welle 21 umlaufenden Schneidbackens 32 geschnitten, wobei der feststehende Schneidbacken 31 nahe dem freien Verlauf der Drähte 15,17 postiert ist, während der scherend den festen Schneidbacken passierende Schneidbacken 32 eine vorgegebene Winkelstellung erhält, so daß die Knickkante 29 voreilend wirkt und zunächst die Verformung der Drähte 15,17 erstellt, ehe das Schneiden erfolgt.

Die Schneidbacken 31,32 liegen bezüglich der Achse des Drillhakens 19 im gleichen axialen Bereich wie die Knickkanten 29, da die Drähte 15,17 zwischen Knickkante 29 und Rolle 25 vorwiegend horizontal bzw. senkrecht zu den Achsen der Wellen 21 und 22 verlaufen. Dementsprechend sind die Schneidbacken mit ihren außen- bzw. innenliegenden Schneidkanten axial ausgerichtet. Dies führt zu einer insgesamt gedrungenen, insbesondere axial kurzen Bauform, die insgesamt für die Drilleinrichtung Platz spart. Darüber hinaus werden relativ kurze Drillenden wie die Drillenden 9, 10 oder 11 in Fig. 1 erzielt mit Vorteil für einen verringerten Materialverbrauch an Draht, aber auch mit dem Vorteil, daß Störungen und Gefahren durch vorspringende Drillenden verringert werden.

Der umlaufende Schneidbacken 32 ist an einem Montageflansch 33 als Stützkörper angebracht, so daß seine Schneidbelastungsstöße nicht von der Welle 21 aufgenommen werden müssen. Die sich dadurch ergebende robuste Bauweise trägt weiterhin dazu bei, daß hier beträchtliche Kräfte sowohl im Bereich des Drillhakens, im Bereich der Gleitkante 28 und der Knickkante 29 wie auch im Schneidbereich aufgenommen werden können. Damit läßt sich auch einem Bedarf an dickeren und festeren Drähten Rechnung tragen, die insbesondere bei hohen Preßkräften und expansivem Preßgut vorteilhaft sind.

Wie aus Fig. 2 ersichtlich ist, hat der Drillhaken 19 gegenüber dem Drillhaken 20 eine voreilende Einstellung, so daß bei einer kurz vor dem Schneiden der Drähte stehenden Drillsituation gemäß Darstellung am Drillhaken 19 die Drähte 15, 17 bereits durch den Drillschlitz 30 hindurch verlaufen, während auf der anderen Seite der Drillhaken 20 erst damit beginnt, die Drähte 15,17 zu erfassen und zur Welle 22 hin heranzuziehen. Dies ist unkritisch und sogar trotz der Möglichkeit eines gewissen Durchrutschens der Drähte zum Drillhaken 20 hin vorteilhaft, da das gegenüber dem Abschneiden verzögerte Verdrillen für kürzere Drillenden sorgt, ohne daß die Drähte durch Drillbelastung vor dem Schneiden gefährlich beansprucht werden und reißen könnten.

Der Drillhaken 20 liegt in einer Ebene mit Drillhaken 19, wobei beide parallel zueinander und in der gleichen Richtung umlaufen. Die axial kurze Anordnung und auch die Ausrichtung der Drahtholnadel 16 mit der Rolle 25 im Sinne einer kurzachsigen Bauweise und einer dicht an den Träger 18 herangerückten Konstruktion schafft vorteilhafte robuste, aber auch präzise und vor allem betriebssichere Ausgestaltungen.

## Patentansprüche

1. Maschine (1) zum Pressen und Umschnüren von Ballen, insbesondere Altpapierballen, bestehend aus einem Preßkasten oder -kanal (6), einem Preßstempel (4) und einer Umschnürungseinrichtung (13) zum Anlegen von Drahtumreifungen (12) um einen fertiggepreßt gehaltenen Ballen (7,8) aus Paaren von an gegenüberliegenden Seiten des Ballens verlaufenden Drähten (15,17), die hinter dem Ballen mittels einer Zuführeinrichtung (16) zusammengeführt, durch eine Drilleinrichtung (13) mit zwei umlaufend antreibbaren Drillhaken (19,20) mit einem Drillschlitz (30) erfaßt und verdrillt, durch eine auf die Drähte im Bereich zwischen den Drillhaken wirkende Schneideinrichtung (31,32) abgetrennt werden und durch die Drillhaken (19,20) einerseits eine die Umschnürung des gepreßten Ballens schließende und andererseits die Drähte für eine nachfolgende Ballen-Umschnürung verbindende Verdrillung (9,10,11) erfahren, wobei die Schneideinrichtung zwei Schneidbacken (31,32) aufweist, von denen einer (32) mit einem der Drillhaken (19) umlaufend verbunden ist, **dadurch gekennzeichnet, daß** an dem mit dem Schneidbacken (32) verbundenen Drillhaken (19) eine als Wendel geformte Gleitkante (28) angeordnet ist, die in einem Abstand vom Drillschlitz (30) zu einer exzentrischen Knickkante (29) führt, die in Umlaufrichtung des Drillhakens (19) gegenüber dem umlaufenden Schneidbacken (32) voreilend versetzt ist.

2. Maschine nach Anspruch 1, **dadurch gekennzeichnet, daß** die exzentrische Knickkante (29) einen größeren radialen Abstand von der Achse des Drillhakens als der Drillschlitz (30) aufweist.

3. Maschine nach Anspruch 1 oder 2, **dadurch gekennzeichnet, daß** die Knickkante (29) und der umlaufende Schneidbacken (32) in einem gemeinsamen axialen Bereich liegen.

4. Maschine nach Anspruch 3, **dadurch gekennzeichnet, daß** der umlaufende Schneidbacken (32) mit einer außenliegenden Schneidkante vorwiegend axial ausgerichtet ist.

5. Maschine nach einem der Ansprüche 3 oder 4, bei der die beiden Drähte (15,17) an der Zuführeinrichtung (16) gemeinsam zum Verdrillen zwischen den Drillhaken um eine Umlenkung (25) verlaufen, **dadurch gekennzeichnet, daß** die Umlenkung in einem gemeinsamen axialen Bereich mit dem umlaufenden Schneidbacken (32) liegt.

6. Maschine nach Anspruch 5, **dadurch gekennzeichnet, daß** die Umlenkung als drehbare Umlenkrolle (25) ausgebildet ist.

7. Maschine nach einem der Ansprüche 1 bis 6, **dadurch gekennzeichnet, daß** der mit dem Schneidbacken versehene Drillhaken (19) gegenüber dem anderen Drillhaken (20) in Umlaufrichtung voreilend eingestellt ist.

8. Maschine nach Anspruch 7, **dadurch gekennzeichnet, daß** der andere Drillhaken (20) die Drähte (15,17) mit dem Drillschlitz erst nach dem Schneiden durch die Schneideinrichtung (31,32) erfaßt.

9. Maschine nach einem der Ansprüche 1 bis 8, **dadurch gekennzeichnet, daß** der mit dem Schneidbacken (32) versehene Drillhaken (19) am freien Ende eines Wellenzapfens (21) angeordnet ist, der nahe der Knickkante in einen den Schneidbacken (32) halternden Stützkörper (33) übergeht.

10. Maschine nach Anspruch 9, **dadurch gekennzeichnet, daß** die Drillhaken (19,20) parallel zueinander und in einer Ebene umlaufend angeordnet sind.

## Claims

1. Machine (1) for pressing and tying bales, particularly waste paper bales, consisting of a pressing box or duct (6), a press ram (4) and a tying device (13) for wrapping wire hooping (12) around a bale (7, 8) kept pressed by pairs of wires (15, 17) running on opposite sides of the bale, which wires are brought together behind the bale by means of a feeding device (16), are taken up and twisted by a twisting device (13) with two twisting hooks (19, 20), which can be driven in rotary fashion, and with a twisting slot (30), are separated by a cutting device (31, 32) acting on the wires in the area between the twisting hooks, and undergo twisting (9, 10, 11) and are subjected on the one hand to twisting by the twisting hooks (19, 20), closing the tying of the pressed bale, and on the other hand to twisting connecting the wires for subsequent bale tying (9, 10, 11), the cutting device exhibiting two dies (31, 32), one (32) of which is connected peripherally to one of the twisting hooks (19), **characterised in that** a spirally shaped sliding edge (28) is arranged on the twisting hook (19) connected to the die (32), which edge leads at a certain distance from the twisting slot (30) to an eccentric buckling edge (29) which is moved forward in the peripheral direction of the twisting hook (19) relative to the rotating die (32).

2. Machine according to claim 1, **characterised in that** the eccentric buckling edge (29) exhibits a greater radial distance from the axis of the twisting hook than the twisting slot (30).

3. Machine according to claim 1 or 2, **characterised in that** the buckling edge (29) and the rotating die (32) lie within a common axial area.

4. Machine according to claim 3, **characterised in that** the rotating die (32) is aligned mainly axially with an external cutting edge.

5. Machine according to one of claims 3 or 4, in which the two wires (15, 17) on the feed device (16) together run between the twisting hooks about a deflector, for twisting purposes, **characterised in that** the deflector lies in a common axial area with the rotating die (32).

6. Machine according to claim 5, **characterised in that** the deflector is designed as a rotary deflector roll (25).

7. Machine according to one of claims 1 to 6, **characterised in that** the twisting hook (19) provided with the die is set so that it moves in advance of the other twisting hook (20) in the peripheral direction.

8. Machine according to claim 7, **characterised in that** the other twisting hook (20) does not receive the wires (15, 17) with the twisting slot until they are cut by the cutting device (31, 32).

9. Machine according to one of claims 1 to 8, **characterised in that** the twisting hook (19) provided with the die (32) is arranged at the free end of a shaft journal (21) which turns into a supporting element (33) retaining the die (32) dose to the buckling edge.

10. Machine according to claim 9, **characterised in that** the twisting hooks (19, 20) are arranged rotatably parallel with each other and in one plane.

## Revendications

1. Machine (1) pour presser et ligaturer des balles, en particulier des balles de vieux papiers, constituée d'un canal ou d'un caisson de pressage (6), d'un piston de pressage (4) et d'un équipement de ligature (13) pour appliquer des enroulements de fil (12) autour d'une balle (7, 8) maintenue à l'état pressé terminé, constitués de paires de fils (15, 17) s'étendant sur des côtés opposés de la balle, fils qui sont réunis derrière la balle au moyen d'un équipement d'amenée (16), sont saisis et torsadés avec une fente de torsion (30) par un équipement de torsion (13) présentant deux crochets de torsion (19, 20) pouvant être entraînés en rotation, sont coupés par un équipement de coupe (31, 32) agissant sur les fils dans la zone entre les crochets de torsion et subissent par ces crochets de torsion (19, 20) une torsion (9, 10, 11) fermant d'une part la ligature de la balle pressée et liaisonnant d'autre part les fils pour une ligature de balle consécutive, l'équipement de coupe présentant deux mâchoires de coupe (31, 32) dont l'une (32) est raccordée en rotation avec l'un des crochets de torsion (19), **caractérisée en ce qu'**un bord de glissement (28) conformé en hélice est disposé sur le crochet de torsion (19) raccordé à la mâchoire de coupe (32), lequel bord de glissement conduit à une distance de la fente de torsion (30) à un bord de pliage excentrique (29) qui est décalé en avant par rapport de la mâchoire de coupe rotative (32) dans le sens de la rotation du crochet de torsion (19).

2. Machine selon la revendication 1 **caractérisée en ce que** le bord de pliage excentrique (29) présente une plus grande distance radiale par rapport à l'axe du crochet de torsion que la fente de torsion (30).

3. Machine selon la revendication 1 ou 2, **caractérisée en ce que** le bord de pliage (29) et la mâchoire de coupe rotative (32) se trouvent dans une zone axiale commune.

4. Machine selon la revendication 3, **caractérisée en ce que** la mâchoire de coupe rotative (32) est alignée surtout axialement sur un bord de coupe situé à l'extérieur.

5. Machine selon l'une quelconque des revendications 3 ou 4, dans laquelle les deux fils (15, 17) s'étendent conjointement sur l'équipement d'amenée (16) autour d'un dispositif de renvoi (25) pour être torsadés entre les crochets de torsion, **caractérisée en ce que** le dispositif de renvoi se trouve dans une zone axiale commune à la mâchoire de coupe rotative (32).

6. Machine selon la revendication 5, **caractérisée en ce que** le dispositif de renvoi est conformé en tant que rouleau de renvoi rotatif (25).

7. Machine selon l'une quelconque des revendications 1 à 6, **caractérisée en ce que** le crochet de torsion (19) pourvu de la mâchoire de coupe est ajusté en avant par rapport à l'autre crochet de torsion (20) dans le sens de la rotation.

8. Machine selon la revendication 7, **caractérisée en ce que** l'autre crochet de torsion (20) saisit les fils (15, 17) avec la fente de torsion seulement après la coupe par l'équipement de coupe (31, 32).

9. Machine selon l'une quelconque des revendications 1 à 8, **caractérisée en ce que** le crochet de torsion (19) pourvu de la mâchoire de coupe (32) est disposé sur l'extrémité libre d'un tourillon d'arbre (21) qui se change à proximité du bord de pliage en un corps d'appui (33) supportant la mâchoire de coupe (32).

10. Machine selon la revendication 9, **caractérisée en ce que** les crochets de torsion (19, 20) sont disposés parallèlement l'un à l'autre et en rotation dans un plan.
